# EUROPÄISCHE PATENTSCHRIFT

(11) **EP 3 515 682 B1**
(45) Veröffentlichungstag und Bekanntmachung des Hinweises auf die Patenterteilung: **15.09.2021**
(21) Anmeldenummer: 17772405.1
(22) Anmeldetag: 22.09.2017
(51) Int. Cl.: B29C 49/48, B29C 49/04, B29K 67/00, B29L 31/00, B29K 223/00

(54) **EXTRUSIONSBLASGEFORMTER BEHÄLTER SOWIE VERFAHREN UND BLASFORMWERKZEUG ZU DESSEN HERSTELLUNG**
EXTRUSION BLOW-MOULDED CONTAINER AND METHOD AND BLOW MOULD FOR THE PRODUCTION THEREOF
RÉCIPIENT MOULÉ PAR EXTRUSION-SOUFFLAGE AINSI QUE PROCÉDÉ ET OUTIL DE MOULAGE PAR SOUFFLAGE POUR LA FABRICATION DUDIT RÉCIPIENT

(30) Priorität: 22.09.2016 CH 12382016
(43) Veröffentlichungstag der Anmeldung: 31.07.2019
(73) Patentinhaber: Alpla Werke Alwin Lehner GmbH & Co. KG, 6971 Hard (AT)
(72) Erfinder: NIGL, Christoph, 6922 Wolfurt (AT); MARENT, Michael, 6971 Hard (AT); VALTINER, Oswald, 6900 Bregenz (AT); STARCHL, Christian, 6700 Bludenz (AT)
(74) Vertreter: Riederer Hasler & Partner Patentanwälte AG
(86) Internationale Anmeldenummer: PCT/EP2017/074136
(87) Internationale Veröffentlichungsnummer: WO 2018/055137

(56) Entgegenhaltungen:
- CA-A- 1 238 872
- FR-A1- 3 003 793
- GB-A- 1 453 176
- US-A1- 2015 328 825
- US-A1- 2015 375 442

## Beschreibung

### Technisches Gebiet

Die Erfindung betrifft einen Behälter mit einem speziell ausgestalteten Standbereich, ein Verfahren zur Herstellung eines solchen Behälters und ein Blasformwerkzeug zur Herstellung des genannten Behälters.

### Stand der Technik

Für die Verpackung fluider Produkte, wie zum Beispiel Getränke, Reinigungsmittel, Öle, Kosmetika etc., werden heutzutage in grossem Massstab extrusionsblasgeformte Behälter aus Kunststoff eingesetzt. Deren Herstellung umfasst in der Regel folgende Schritte: Aus einem Blaskopf wird ein Vorformling aus Kunststoff (beispielsweise aus Polyethylen oder Polypropylen) üblicherweise in der Form eines Schlauches extrudiert. Der Vorformling wird in ein geöffnetes Blasformwerkzeug mit einer formgebenden Kavität eingebracht, welches aus zwei Hälften besteht. Nach dem Einbringen des Vorformlings zwischen die Hälften des geöffneten Blasformwerkzeugs wird dieses geschlossen, wobei der Vorformling auf seinen beiden offenen Seiten durch das Blasformwerkzeug eingeklemmt und auf einer Seite verschlossen wird. Auf der gegenüberliegenden anderen Seite verbleibt eine Öffnung in dem Schlauch zum Einführen eines Blasdorns. Durch das Einbringen eines Gases, insbesondere Luft, in das Innere des Vorformlings mittels eines in die Öffnung und/oder ins Innere des Blasformwerkzeugs eingefahrenen Blasdorns wird dieser im Blasformwerkzeug aufgeblasen. Der Vorformling wird aufgeblasen, bis er mit der gekühlten Wand der Kavität in Kontakt tritt, dessen Form er in der Folge annimmt, wodurch ein Behälter entsteht, der durch Öffnen des Blasformwerkzeugs entformt werden kann. Die bei solchen Verfahren zum Einsatz kommenden Extrusionsblasmaschinen besitzen üblicherweise einen oder mehrere Extruder zur Zuführung des Kunststoffmaterials. Der Ausgang eines Extruders ist jeweils mit einem Blaskopf verbunden, an dessen vorzugsweise in der Öffnungsweite regulierbaren Austrittsdüse der ein- oder mehrschichtig extrudierte Vorformling austritt. Der ein- oder mehrschichtige Vorformling kann mit Sichtstreifen, Dekorstreifen oder bezogen auf den Umfang mit mehreren, beispielsweise verschiedenfarbigen, Segmenten versehen sein.

Durch den Blasprozess wird das Material des Vorformlings gestreckt und dadurch in seiner Wandstärke reduziert. Ferner kann dem Vorformling nur in den Bereichen Material entzogen werden, die noch in teigigem Zustand sind, also noch nicht durch Verbleib an der gekühlten Wandung der Kavität erstarrt sind. Beim Ausblasen des Standbereichs von Behälterboden zur Behälterseitenwand sind in der Regel bereits Teile des Behälterbodens und der Behälterseitenwand gebildet und erstarrt, so dass nur wenig Material des Vorformlings zur Bildung dieses Standbereichs zur Verfügung steht. In Konsequenz muss das wenige Material mehr gestreckt werden und es kommt damit zu einer Ausdünnung der Wandstärke in diesem Standbereich. Dieser Effekt macht sich besonders beim Ausblasen des Standbereichs bemerkbar, der sich im Wesentlichen quer zur Klemmung des Vorformlings erstreckt, da hier das Material am meisten verstreckt wird. Somit sind der Ausgestaltung des Behälterbodens und damit der Gestaltung des Behälters Grenzen gesetzt. Allerdings sollte gerade der Standbereich besonders stabil ausgestaltet sein, damit ein gefüllter Behälters bei einem Fall aus mindestens 0,5 m Höhe nicht birst.

In der GB 1 453 176 A ist ein blasgeformter Behälter offenbart, dessen Boden durch Einfahren eines konusförmigen Schiebers in eine Blasform gebildet wird. Dabei wird der Boden eingestülpt und dessen Ränder werden durch die Konusform des Schiebers an entsprechend zum Schieber negativ ausgebildete konusförmige Wände der Blasform gepresst. Dadurch können die überlappenden Seiten des Standbodens aneinandergepresst werden und miteinander verschweisst werden.

Die CA 1 238 872 A liegt im technischen Gebiet der Behälter, welche im Streck-Blas-Verfahren aus einem Preform hergestellt werden. Durch einen Schieber wird der Boden nach innen verschoben. Im Anschluss werden die Innenseiten der einander zugewandten Behälterwände durch Ultraschallschweissen miteinander versschweisst.

In der FR 3 003 793 A1 wird ebenfalls ein Behälter offenbart, welcher aus einem Preform im Streck-Blas-Verfahren hergestellt wird. Der Formboden schiebt den Boden des Behälters nach innen. Der Formboden besitzt in einem Bereich die Form eines Kegelstumpfes, welcher die Basis umfangsvergrössernd ausformt.

### Aufgabe der Erfindung

Somit kann eine Aufgabe der Erfindung darin bestehen, einen extrusionsgeblasgeformten Behälter bereitzustellen, dessen Standbereich unabhängig von der Ausgestaltung des Behälterbodens ausreichend stabil ausgestaltet ist.

Vorteile der vorliegenden Erfindung ergeben sich aus der nachfolgenden Beschreibung.

### Darstellung der Erfindung

Die oben genannte Aufgabe wird gelöst durch einen Behälter nach Anspruch 1, ein Verfahren nach Anspruch 9 und einem Blasformwerkzeug nach Anspruch 13.

Nachfolgend werden Merkmale beschrieben, wobei diese (individuell) als bevorzugte Merkmale zu betrachten sind, auch wenn sie nicht explizit als solche bezeichnet werden. Die Merkmale seien separat (als Teil eines beliebigen Behälters, eines beliebigen Blasformwerkzeugs oder eines beliebigen Verfahrens zur Herstellung eines Behälters) und - soweit sie sich nicht gegenseitig ausschliessen - in beliebiger Kombination offenbart. Dies schliesst die Möglichkeit ein, Vorrichtungsmerkmale zur Spezifizierung von Verfahrensmerkmalen verwenden zu können, und umgekehrt.

Gemäß einem ersten Ausführungsbeispiel der Erfindung ist ein extrusionsblasgeformter Behälter nach Anspruch 1 vorgeschlagen.

Zur Herstellung des vorgeschlagenen Behälters wird in einer Kavität eines Blaswerkzeugs zuerst aus einem Vorformling ein Behältervorprodukt blasgeformt, dessen Bodenbereich mittels eines verlagerbaren Schiebers durch ein Verlagern von einer ersten Position in eine zweite Position zumindest teilweise in das Behälterinnere verlagert ist. Das Behältervorprodukt hat eine Außenform angenommen, die mit der Innenform der Kavität korrespondiert, die die Kavität einnimmt, wenn der verlagerbare Schieber in der ersten Position steht. Somit sind bei dem Behältervorprodukt in weiten Teilen die Form des späteren Behälterbodens, nämlich soweit sie an einer in der Regel dem Blasdorn zugewandten Stirnfläche des verlagerbaren Schiebers anliegt, und in weiten Teilen auch die Seitenwand des späteren Behälters festgelegt. Ferner kann bei dem Behältervorprodukt auch eine Behälterschulter und ein Behälterhals mit einer Ausgießöffnung des späteren Behälters festgelegt sein. Durch ein Verlagern des verlagerbaren Schiebers aus der ersten Position, in der die Form des Bodens des Behältervorprodukts festgelegt ist, in die zweite Position, in der der Boden des Behältervorprodukts in das Behälterinnere zur Erzeugung des Behälterbodens des Behälters gestoßen oder gedrückt wird, erfolgt die endgültige Ausgestaltung des Behälterbodens. Je nach Ausgestaltung des Schiebers, insbesondere dessen Ausformung in Verbindung mit einer Seitenwandung der Kavität, und dessen Hub erfolgt ein Biegen und/ oder Stauchen eines Teilbereichs der an den Boden des Behältervorprodukts angrenzenden Seitenwand des Behältervorprodukts zu dem Behälterboden des späteren Behälters unter Ausbildung des Standbereichs. Biegen umfasst auch Falten, bei der die Biegung im Wesentlichen eckig ausgebildet ist. Beim Biegen oder Falten bleibt die Wandstärke der Seitenwand des Behältervorprodukts im Wesentlichen erhalten. Bei dem vorgeschlagenen Behälter ist somit ein Teilbereich der Seitenwand des Behältervorprodukts im Bereich des hinterschnittenen Behälterbodens zu dem Standbereich geformt. Durch den Einsatz eines verlagerbaren Schiebers ist die Tiefe der Verlagerung in das Behälterinnere zur Ausbildung des Behälterbodens nicht beschränkt. Auch unterliegt die Ausgestaltung des Behälterbodens im Wesentlichen keiner Beschränkung. Damit sind Behälterböden erzeugbar, die mittig nach außen gewölbt, also konvex sind. Somit kann beispielsweise mittig im Behälterboden ein Tauchrohr einer handbetätigbaren Pumpe einer Sprühflasche enden und somit eine verbesserte Restentleerung ermöglichen. Auch kann der Behälterboden als schiefe Ebene ausgebildet sein, so dass sich der Inhalt des Behälters an einer Behälterseitenwand sammelt. Dadurch, dass bei Erzeugung des Standbereichs dieser gegenüber der Behälterseitenwand nicht geschwächt ist, kann zusätzlich Material eingespart werden, da die Behälterseitenwand insgesamt dünner ausgeführt sein kann.

Gemäß einem weiteren Ausführungsbeispiel der Erfindung ist zumindest ein Teilbereich eines an den hinterschnittenen Behälterboden angrenzenden Abschnitts der Behälterseitenwand im Wesentlichen senkrecht auf eine durch den Standbereich aufgespannte Ebene.

Der Abschnitt der Behälterseitenwand und der Standbereich bilden eine Schürze. Diese Schürze steht im Wesentlichen senkrecht auf der Ebene und besitzt damit keine konusförmige oder glockenförmige Form, die über den an den Abschnitt angrenzende verbleibende Behälterseitenwandung hinausstehen könnte. Damit kann sichergestellt werden, dass sich die Behälterseitenwandung an- und/ oder absatzlos von der Schulter bis zum Standbereich erstreckt. Die Höhe der Schürze ist im Wesentlichen die Höhe, um die der Behälterboden in das Behälterinnere irreversibel verlagert ist.

Gemäß einem weiteren Ausführungsbeispiel der Erfindung weist der Standbereich eine Dicke auf, die gleich oder größer ist als eine Wanddicke der Behälterseitenwand.

Eine Messung der Dicke des Standbereichs kann senkrecht zu einer durch den Standbereich aufgespannten ersten Ebene erfolgen. Eine Messung der Dicke der Seitenwandung erfolgt im Wesentlichen 1mm bis 2mm oberhalb einer sich parallel zu der ersten Ebene erstreckenden und die Seitenwand schneidenden zweiten Ebene, die den höchsten Punkt des in das Behälterinnere ragenden Behälterbodens tangiert.

Gemäß einem weiteren Ausführungsbeispiel der Erfindung schließen der Behälterboden und die Behälterseitenwand einen Winkel ein, der gleich oder kleiner 45°, bevorzugt gleich oder kleiner 30° und besonders bevorzugt gleich oder kleiner 15° ist.

Je spitzer der Winkel ausgebildet ist, desto höher kann die Stabilität des Standbereichs sein. Da der Winkel durch Biegen, insbesondere durch Falten, und/ oder Stauchen der Seitenwand des Behältervorprodukts erzeugt wird, ist eine Ausbildung des Standbereichs erzeugbar, die an seiner Innenseite im Wesentlichen scharfkantig sein kann. Unter im Wesentlichen scharfkantig ist zu verstehen, dass ein Radius an der Innenseite von 0,2mm zulässig ist.

Gemäß einem weiteren Ausführungsbeispiel der Erfindung ist die Seitenwand des Behältervorprodukts zur Erzeugung des Standbereichs des Behälters unter Bildung einer Kante gefaltet.

Gerade eine Faltung erlaubt eine im Wesentlichen eckige Ausgestaltung des Standbereichs. Unter Faltung im Sinne dieser Erfindung ist eine im Wesentlichen scharfkantige Biegung zu verstehen. Durch die Kante kann die Stabilität des Standbereichs nochmals erhöht werden. Insbesondere, wenn die Falte einen Winkel von etwa 90° einschließt, können seitlich auf den Standbereich einwirkende Kräfte, wie sie beim Fall auftreten können, durch den Standbereich gut aufgenommen werden und gedämpft in die Behälterseitenwand und/ oder den Behälterboden eingeleitet werden.

Gemäß einem weiteren Ausführungsbeispiel der Erfindung erstrecken sich die Behälterseitenwandung und der Behälterboden zumindest in einem Teilbereich parallel zueinander.

Hierbei können die Behälterseitenwandung und der Behälterboden voneinander beabstandet sein oder sich berühren. Einander berührende Flächen verhindern ein Eindringen des Behälterinhalts bis in den Standbereich. Voneinander beabstandete Flächen können jedoch eine höhere Stabilität als sich berührende Flächen aufweisen. Insbesondere im Hinblick auf eine Restentleerung des Behälters kann es von Vorteil sein, wenn der Behälterinhalt nicht bis zum Standbereich vordringen kann.

Gemäß einem weiteren Ausführungsbeispiel der Erfindung sind die Behälterseitenwand und der Behälterboden in dem Teilbereich zumindest teilweise einander berühren und / oder aneinander verschweißt.

Der Schweißprozess findet in dem Blaswerkzeug ohne Schweißzusätze alleine durch die Temperatur und den Druck statt, der von dem Schieber und der Innenwandung der Kavität auf die doppelte Wandung ausgeübt wird. Es sei darauf hingewiesen, dass der Schieber frei von umfangvergrößernden Strukturen ist, wie sie beispielsweise ein Spreizdorn aufweist. Es wird davon ausgegangen, dass die Wärmekapazität des Kunststoffes ausreichend ist, um einen Schweißprozess einzuleiten, wenn sich die Wandungen mit ihren Innenseiten berühren. Der von dem Schieber ausgeübte Druck bezieht sich somit alleine darauf, die Innenwandung des Behälterbodens in Berührung, respektive Kontakt, mit der Innenwandung der Behälterseitenwand zu bringen und zu halten. Durch das exakte Positionieren der Innenwandungen aneinander kann die Güte der Schweißung verbessert werden. Der Standbereich weist dann, im Wesentlichen parallel zu der durch den Standbereich aufgespannten Ebene gemessen, eine Dicke auf, die im Wesentlichen der doppelten Wanddicke der Behälterseitenwand entspricht.

Gemäß einem weiteren Ausführungsbeispiel der Erfindung läuft der Standbereich des Behälters spitz zu.

Durch ein Stauchen oder Falten und Stauchen ist es möglich, den Standbereich plastisch zu verformen. Hierdurch kann der Standbereich spitz ausgebildet sein, um beispielsweise den Standbereich mit der Behälterseitenwandung bündig auszubilden.

Gemäß einem weiteren Ausführungsbeispiel der Erfindung ist der Standbereich umlaufend.

Somit erzeugt der Behälter beim ordnungsgemäßen aufrechten Lagern beim Betrachter ein homogenes Erscheinungsbild, da sich der Behälter bis zu der Ebene erstreckt, auf der er gelagert ist.

Gemäß einem weiteren Ausführungsbeispiel der Erfindung ist der Standbereich durch mindestens zwei Rücksprünge unterteilt, die voneinander beabstandet sind.

Hierbei können die Rücksprünge, insbesondere, wenn sie einander gegenüber liegen, genutzt werden, um den Behälterboden zu versteifen.

Gemäß einem weiteren Ausführungsbeispiel der Erfindung ist der Standbereich durch drei Rücksprünge unterteilt, die voneinander beabstandet sind.

Hierdurch teilt sich der Standbereich im Wesentlichen auf drei Füße. Hierdurch kann gewährleistet werden, dass der Behälter auch auf unebenen Unterlagen sicher, respektive wackelfrei, steht.

Gemäß einem weiteren Ausführungsbeispiel der Erfindung ist der Behälterboden konvex nach außen gewölbt und steht gegenüber einer durch den Standbereich aufgespannten Ebene zurück.

Hier kann beispielsweise das Tauchrohr einer handbetätigbaren Pumpe einer Sprühflasche in dem Mittelpunkt des konvexen Behälterboden enden und damit eine Restentleerung verbessern. Auch kann der Mittelpunkt als ein nach außen weisender Dom ausgebildet sein, so dass hierdurch die Restentleerung nochmals verbessert werden kann. Natürlich kann der Dom auch an anderer Stelle des Behälterbodens ausgebildet sein.

Gemäß einem weiteren Ausführungsbeispiel der Erfindung vergrößert sich ein Abstand des Behälterbodens gegenüber einer durch den Standbereich aufgespannten Ebene im Wesentlichen von einer ersten Behälterseitenwand zu einer der ersten Behälterseitenwand gegenüberliegenden zweiten Behälterseitenwand kontinuierlich.

Hierdurch kann sich der Behälterinhalt an der ersten Behälterseitenwand sammeln, so dass beispielsweise bei einer Sprühflasche an dieser ersten Behälterseitenwand das Tauchrohr einer handbetätigbaren Pumpe enden kann. Dies kann eine verbesserte Restentleerung des Behälters bewirken. Hierbei kann der Behälterboden gerade, konkav oder konvex gekrümmt sein.

Gemäß einem weiteren Ausführungsbeispiel der Erfindung ist der Behälter einstückig aus Kunststoff gefertigt.

Verwendete Kunststoffe können Polyolefine wie HDPE, PP, PE, LDPE und deren Gemische sowie Polyamide und diverse Polyesterderivate wie PET-G, PET-X oder recycliertes PET und deren Gemische sein. Ferner kann der Vorformling auch mehrere Schichten aus unterschiedlichen Kunststoffen aufweisen, um beispielsweise Farbe, Glanz und/oder Barriere gegen Sauerstoff aufzuweisen.

Gemäß einem weiteren Ausführungsbeispiel der Erfindung weist eine dem Behälterboden gegenüberliegende Oberseite des Behälters eine mit dem Behälterboden korrespondierende Form auf und/oder die Oberseite des Behälters ist in dem Behälterboden eines identischen Behälters aufnehmbar, so dass mehrere solcher Behälter aufeinander stapelbar sind.

Hierbei kann die Oberseite und der Behälterboden derart gestaltet sein, dass zwei aufeinander gestapelte identische Behälter mittels Formschluss oder Reibschluss aneinander lösbar verbunden sind.

Gemäß einem weiteren Ausführungsbeispiel der Erfindung wird ein Verfahren zur Herstellung eines Behälters mittels Extrusionsblasformen, nach Anspruch 9 vorgeschlagen.

In der Regel wird zum Aufblasen des Vorformlings Luft verwendet. Bei Betätigung des Schiebers, der als Stempel ausgebildet sein kann, kann sich in dem Behältervorprodukt Luft mit Überdruck befinden, die entsprechend der Hubbewegung des Stempels reduziert wird, um innerhalb des Behälters bis zu dessen Entformung im Wesentlichen einen konstanten Überdruck zu besitzen. Auch kann der Überdruck vor Verlagerung des Schiebers aus dem Behältervorprodukt abgelassen worden sein. Es versteht sich, dass der Stempel in der zweiten Position so lange verbleibt, bis der Behälter entformungsfähig ist. Erst dann wird der Stempel aus seiner zweiten Position in Richtung der ersten Position verlagert, bis der Schieber außer Eingriff mit dem zu entformenden Behälter ist, das Blaswerkzeug komplett geöffnet und der Behälter entnommen.

Gemäß einem weiteren Ausführungsbeispiel der Erfindung ist das Blasformwerkzeug beim Verlagern des Schiebers von der ersten Position in die zweite Position geschlossen.

Gemäß einem weiteren Ausführungsbeispiel der Erfindung ist der Schieber frei ist von umfangsvergrößernden Strukturen, wie sie beispielsweise Faltkerne aufweisen.

Dadurch lässt sich der Schieber als ein besonders einfach herzustellender und damit preisgünstiger Stempel ausbilden.

Gemäß einem weiteren Ausführungsbeispiel der Erfindung wird das Blasformwerkzeug zum Verlagern des Schiebers von der ersten Position 1mm, bevorzugt 0,3mm bis 0,5mm geöffnet und nach Erreichen der zweiten Position geschlossen.

Anstatt des gesamten Blasformwerkzeugs kann auch nur ein im Wesentlichen die Höhe des Hubs des Schiebers überspannender Teilbereich des Blaswerkzeugs um diesen Betrag geöffnet werden. Insbesondere, wenn die Seitenwand des Behältervorprodukts um im Wesentlichen 180° gefaltet werden soll, kann ein Öffnen des Blaswerkzeugs bewirken, dass ein Umstülpen des Teilbereichs der Seitenwand, welcher den Standbereich und einen Teilbereich des Behälterbodens bildet, erleichtert wird. Auch können während der Verlagerung des Schiebers im Wesentlichen keine Scherkräfte durch den Schieber in Verbindung mit der Innenwandung der Kavität auf die Seitenwand wirken. Durch das Schließen kann ein Verpressen der parallelen Lagen erfolgen, so dass eine Schlinge, die sich im Bereich der Umkehrung oder Umstülpung der Seitenwand gebildet haben kann, geplättet werden kann. Auch kann das Verpressen zu einer verbesserten Güte der Schweißung führen.

Gemäß einem weiteren Ausführungsbeispiel der Erfindung wird durch das Verlagern des Schiebers von der ersten Position in die zweite Position ein an den Boden des Behältervorprodukts angrenzender Teilbereich der Seitenwand unter Erzeugung einer Kante gefaltet.

Zusätzlich kann der Bereich der Falte durch eine geeignete Profilierung des Schiebers verpresst werden, so dass der Standbereich an seiner Außenseite ebenfalls scharfkantig ausgebildet wird, und ein Biegeradius an der Außenseite des Standbereichs im Wesentlichen nicht erkennbar ist.

Gemäß einem weiteren Ausführungsbeispiel der Erfindung erstreckt sich ein Teilbereich des Behälterbodens im Wesentlichen parallel zur Behälterseitenwand.

Die Behälterseitenwand und der Teilbereich des Behälterbodens können sich einander berühren, miteinander verschweißt sein oder voneinander beabstandet sein. Gerade wenn sie sich berühren und/ oder miteinander verschweißt sind, kann vermieden sein, dass Behälterinhalt bis zu dem Standbereich vordringt.

Gemäß einem weiteren Ausführungsbeispiel der Erfindung steht die sich im Wesentlichen parallel zu dem Teilstück des Behälterbodens erstreckende Behälterseitenwand senkrecht auf eine durch den Standbereich aufgespannte Ebene.

Der Schieber des Blasformwerkzeugs kann, wie oben beschrieben, von der ersten Position in die zweite Position verlagert werden. Dabei kann vorgesehen sein, dass der Schieber Schieberwände aufweist, die parallel zur Verlagerungsrichtung angeordnet sind, wobei der Boden (oder zumindest ein Teilbereich des Bodens) mittels des Schiebers so in das Behälterinnere verlagert und/oder eingeschoben wird, dass im Standbereich des Behälters ein Teilbereich des Behälterbodens und ein Teilbereich der Behälterseitenwand aneinander anliegen und/oder zumindest teilweise miteinander verschweisst sind.

Der besagte Teilbereich des Behälterbodens und/ oder der besagte Teilbereich der Behälterseitenwand haben mit Vorteil die Form eines geraden Zylinder-Mantels oder eines geraden Prisma-Mantels und sind senkrecht zur durch den Standbereich aufgespannten Ebene ausgerichtet. Die durch den Standbereich aufgespannte Ebene enthält, wenn der Behälter auf einer Oberfläche aufrecht stehend gelagert ist, mit Vorteil die Berührungspunkte des Behälters mit der besagten Oberfläche.

Alternativ oder zusätzlich kann der besagte Teilbereich des Behälterbodens im Wesentlichen parallel zum besagten Teilbereich, respektive Abschnitt, der Behälterseitenwand und/oder parallel zum sich an den besagten Teilbereich der Behälterseitenwand anschliessenden Teil der Behälterseitenwand verlaufen.

Gemäß einem weiteren Ausführungsbeispiel der Erfindung spannt der Standbereich des Behälters eine Ebene auf, wobei der tiefste Punkt des Behälterbodens des Behältervorprodukts mittels des Schiebers so weit in das Behälterinnere hinein geschoben wird, bis der tiefste Punkt gegenüber der Ebene in das Behälterinnere hinein zurücksteht.

Somit kommt der Behälterboden nicht mit dem Untergrund in Berührung, auf dem der Behälter ordnungsgemäß gelagert wird.

Gemäß einem weiteren Ausführungsbeispiel der Erfindung ist ein Blasformwerkzeug nach Anspruch 13 vorgeschlagen, dessen Behälterinneres durch eine Behälterseitenwand und einen Behälterboden festgelegt ist, wobei ein Standbereich an die Behälterseitenwand und an den Behälterboden unlösbar verbunden ist. Ein von einer ersten Position in die Kavität hinein in eine zweite Position, und umgekehrt, verlagerbarer Schieber definiert in der ersten Position eine Form eines Bodens eines Behältervorprodukts und in der zweiten Position eine Form eines hinterschnittenen Behälterbodens des fertigen Behälters.

Hierbei kann der Schieber im Wesentlichen entlang der Erstreckungsrichtung der Kavität verlagert werden. Die Verlagerung des Schiebers kann mechanisch, elektrisch, pneumatisch oder auch hydraulisch erfolgen. Durch eine Verlagerung des Schiebers kann das Blaswerkzeug eine in ihrer Form veränderbare Kavität aufweisen. In der ersten Position definiert die Innenwandung der Kavität die äußere Form des Behältervorprodukts. In der zweiten Position definiert die Innenwandung der Kavität die äußere Form des Behälters. Eine Seitenwandung des Schiebers kann gegenüber einer Innenwandung der Kavität soweit zurückspringen, dass im Wesentlichen eine doppelte Wandstärke einer Seitenwand eines Behälters, der in der Kavität hergestellt wird, in diesem Rücksprung Platz findet.

Gemäß einem weiteren Ausführungsbeispiel der Erfindung ist die Stirnseite des bewegbaren Schiebers konkav ausgebildet, wobei in der ersten Stellung nur die Stirnseite des Schiebers die Form des Bodens des Behältervorprodukts definiert und in der zweiten Stellung die Stirnseite zusammen mit einer sich daran anschliessenden im Wesentlichen zylindrischen Seitenwand des Schiebers die Form des hinterschnittenen Behälterbodens des Behälters definiert.

Natürlich kann die Stirnseite des Schiebers auch andere Formen wie konvex oder eine schiefe Ebene aufweisen. Auch können unterschiedliche Formen miteinander kombiniert sein.

Gemäß einem weiteren Ausführungsbeispiel der Erfindung ist der Schieber des Blasformwerkzeugs von einer Innenwandung der Kavität derart beabstandet, dass zumindest ein Teilbereich einer Seitenwand des Behältervorprodukts bei Verlagerung des Schiebers von der ersten in die zweite Stellung biegbar, insbesondere faltbar, und/oder stauchbar ist.

Dieser Teilbereich der Seitenwand, der gebogen, gefaltet und/oder gestaucht wird, bildet am fertigen Behälter den Standbereich aus.

Gemäß einem weiteren Ausführungsbeispiel der Erfindung ist der Schieber auf einem ersten Teil einer Verlagerungsstrecke zwischen der ersten Position und der zweiten Position in einem grösseren seitlichen Abstand von der Innenseite der Kavität angeordnet, als auf einem zweiten Teil der Strecke.

Es kann das Blasformwerkzeug eine umlaufende ringförmige Vertiefung aufweisen. Diese Vertiefung erleichtert die Umkehrung oder Umstülpung des Teilbereichs der Seitenwand des Behältervorprodukts, der den Standbereich des späteren Behälters bildet. Hierdurch kann es dem Teilbereich der Seitenwand des Behältervorprodukts erleichtert sein, bei der Umstülpung dieses Teilbereichs zur Erzeugung des Standbereichs des späteren Behälters eine Schlinge zu bilden. Erleichternd kann hierzu vorgesehen sein, dass der Boden des Vorprodukts umlaufend größer ist als der Behälterboden des späteren Behälters. Die Höhe der ringförmigen Vertiefung wird in der Regel gleich oder kleiner als der halbe Hub des Stempels sein.

### Kurze Beschreibung der Zeichnungen

Es zeigt in schematischer, nicht massstabsgetreuer Darstellung:
Fig. 1a einen Behälter in perspektivischer Ansicht von oben;
Fig. 1b den Behälter aus Fig.1a in perspektivischer Ansicht von unten;
Fig. 2a eine Seitenansicht von zwei aufeinander gestapelten Behältern;
Fig. 2b eine Seitenansicht eines Behälters mit Tauchrohr;
Fig. 2c eine Seitenansicht eines Behälters mit Zusatzprodukt;
Fig. 2d eine Seitenansicht eines Behälters mit einer handbetätigbaren Pumpe und Tauchrohr sowie einem zum Rand hin abfallenden Boden;
Fig.3a einen Längsschnitt durch ein Blasformwerkzeug mit einem verlagerbaren Schieber in einer ersten Position; und
Fig.3b das Blasformwerkzeug aus Fig.3a mit dem verlagerbaren Schieber in einer zweiten Position.

### Detaillierte Beschreibung beispielhafter Ausführungsformen

Die Erfindung wird nachfolgend anhand der Zeichnungen beispielhaft erläutert.

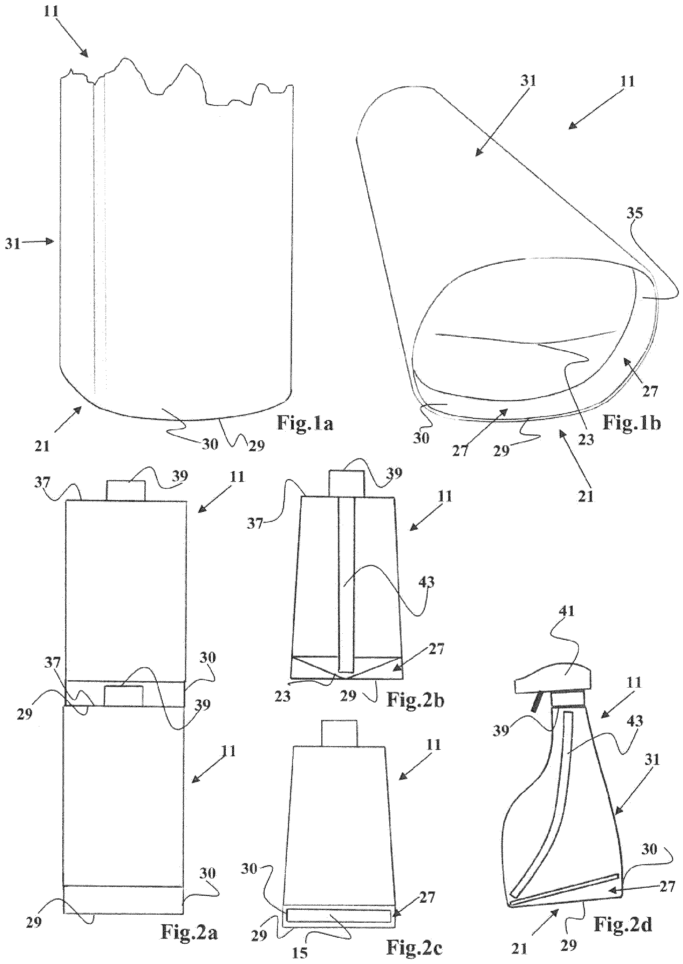

Fig.1a und 1b zeigen einen Behälter 11 mit einer Behälterseitenwand 31 und einem Behälterboden 21, wobei das Material der Behälterseitenwand 31 unterbrechungsfrei sowie an- und absatzlos in das Material des Behälterbodens 21 übergeht. Der Übergang besitzt die Form einer Kante 29. Die Kante ist durch Faltung einer Seitenwand eines Behältervorprodukts erzeugt worden und bildet den Standbereich des Behälters 11 aus. Die Kante 29 erstreckt sich entlang des gesamten Umfangs des Behälterbodens 21 und spannt eine Ebene auf, wodurch der Behälter 11 auf der Kante stehend stabil gelagert werden kann.

Prinzipiell könnten entlang des Randes des Behälters 11, insbesondere entlang der Kante 29, alternativ oder zusätzlich auch zwei (ein dritter Aufsetzpunkt könnte dann die Kante bilden), drei oder mehr Standfüsse gebildet sein, wobei die Aufsetzpunkte der Standfüsse (d.h. die Berührungspunkte mit einer Oberfläche) in einer Ebene liegen.

Im vorliegenden Beispiel erstreckt sich der Behälterboden 21 ausgehend von der Kante 29 bis zu einem Abstand von zum Beispiel 1 bis 2 Zentimetern von der Kante 29 parallel zur Behälterseitenwand 31 und ist zweckmässigerweise mit dieser verschweisst. Dadurch ist ein doppel wandiger Bereich 30 des Behälters 11 gebildet, der sich entlang des gesamten Umfangs des Behälters 11 erstreckt und den unteren Bereich des Behälters 11 versteift. Zumindest der doppelwandige Bereich 30 ist als gerader Zylindermantel oder gerader Prismamantel ausgebildet, der im Wesentlichen senkrecht auf die durch die Kante 29, die gleichzeitig den Standbereich bildet, aufgespannte Ebene. Der Behälterboden 21 erstreckt sich, ausgehend von der Kante 29, parallel zur Behälterseitenwand 31, entfernt sich anschliessend von der Behälterseitenwand 31 und erstreckt sich in Richtung auf eine Behälterlängsachse zu, wobei er sich vorzugsweise gleichzeitig auch auf die durch die Kante 29 definierte Ebene zu (also nach unten) erstreckt, ohne jedoch die genannte Ebene zu passieren. Dadurch erhält der Behälterboden 21 eine schalenartige Form, die die Restentleerung des Behälters 11 erleichtert.

Eine Alternative, bei der der Behälterboden 21 nicht zum Standbereich hin abfällt, ist in den Fig.2a und 2c gezeigt. Zudem kann der Abstand, bis zu dem sich der Behälterboden 21 ausgehend von der Kante 29 parallel zur Behälterseitenwand 31 erstreckt, auch auf einer Seite des Behälters 11 kleiner sein als auf der gegenüberliegenden Seite und/oder auf dem Rest des Umfangs. Insbesondere kann der Abstand von besagtem Punkt bis zur gegenüberliegenden Seite des Behälters 11 zunehmen. Dadurch liegt der tiefste, mit dem Produkt in Berührung kommende Punkt der Innenseite des Behälterbodens 21 nicht in der Mitte des Behälterbodens 21, wie dies in Fig.1b und 2b gezeigt ist, sondern auf einer Seite des Behälters 11, wie dies beispielhaft in Fig.2d dargestellt ist. Bei Behältern 11, die ein Tauchrohr 43 zur Förderung des Produkts aus dem Behälter 11 aufweisen, wie zum Beispiel dem in Fig.2d gezeigten Behälter mit handbetätigbarer Dosier- oder Zerstäuberpumpe und damit verbundenem Tauchrohr 43, kann dies von Vorteil für die Restentleerung sein.

Der durch den doppelwandigen Bereich 30 begrenzte Hohlraum 27 auf der Unterseite des Behälters 11 bietet Platz für eine nach außen weisende Vertiefung 23 des Behälterbodens 21 gemäss Fig.1b und 2b, kann aber alternativ oder zusätzlich auch zur Aufnahme eines Zusatzprodukts 15 wie beispielsweise eines Schwamms, einer Broschüre oder dergleichen dienen, wie dies beispielhaft in Fig.2c dargestellt ist. Der Hohlraum 27 kann alternativ oder zusätzlich auch zur Aufnahme einer Oberseite eines identischen Behälters 11 ausgebildet sein und dadurch die Stapelbarkeit solcher Behälter 11 ermöglichen, wie dies in Fig.2a illustriert ist. Sinnvollerweise besitzt die Oberseite des Behälters 11 eine zur Unterseite und/oder zum Behälterboden 21 des Behälters 11 korrespondierende Form. Die Unterseite und/oder der Behälterboden 21 eines Behälters 11 kann dabei zum Beispiel die Ausgiessöffnung 39 und vorzugsweise den Bereich von der Ausgiessöffnung 39 bis zur Schulter 37 des Behälters 11 aufnehmen, so dass die Kante 29 des oberen Behälters 11 auf der Schulter 37 des unteren Behälters 11 ruht.

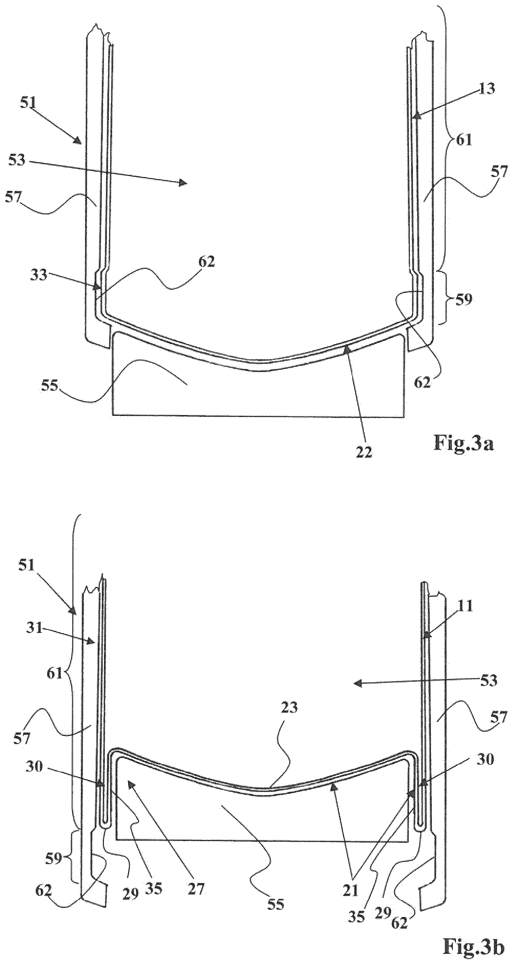

Die Fig.3a und 3b illustrieren einen Teil des Verfahrens zur Herstellung eines Behälters 11 gemäss Fig.1a und 1b. Bekanntermassen wird beim Extrusionsblasformen zuerst ein Vorformling in Form eines extrudierten Schlauches in einer Kavität 53 eines Blasformwerkzeugs 51 aufgeblasen, wobei der Vorformling äusserlich die Form der Kavität 53 annimmt. Dieser Zustand ist in Fig.3a gezeigt, wobei der aufgeblasene Vorformling nach Abschluss der durch Einblasen eines Gases, insbesondere Luft, in den Hohlkörper bewirkten Expansion des Vorformlings und/oder bei maximaler Ausdehnung des Vorformlings als Behältervorprodukt 13 bezeichnet wird. Ergänzend sei darauf hingewiesen, dass bei einem gewöhnlichen Extrusionsblasformen dieser als Behältervorprodukt 13 bezeichnete Behälter das zum Entformen vorgesehene Endprodukt darstellt.

Dieses eine Seitenwand 33 und einen Boden 22 aufweisende Behältervorprodukt 13 wird durch Einfahren eines in Erstreckungsrichtung des Behältervorprodukts 13 verlagerbaren Schiebers 55 des Blasformwerkzeugs 51 in die Kavität 53 verformt. Der verlagerbare Schieber 55 wird dabei von einer in Fig.3a dargestellten ersten Position in eine in Fig.3b gezeigte zweite Position verlagert, wobei das Blasformwerkzeug 51 während des Vorgangs geschlossen bleiben kann, möglicherweise aber auch geringfügig bis maximal 1mm, bevorzugt 0,3mm bis 0,5mm, geöffnet ist. In dem vorliegenden Ausführungsbeispiel werden die die Form der Seitenwand 33 des Behältervorprodukts 13 definierenden Teile 57 des Blasformwerkzeugs 51 nicht verlagert und/oder ihre Position relativ zueinander nicht verändert (deshalb im Folgenden als "unbewegliche Teile 57" bezeichnet).

Die Stirnseite des verlagerbaren Schiebers 55 ist bevorzugt konkav und definiert in der ersten Position im Wesentlichen die Form des Bodens 22 des Behältervorprodukts 13. Der Boden 22 des Behältervorprodukts 13 erstreckt sich in der ersten Position des verlagerbaren Schiebers 55 vorzugsweise um höchstens 10 oder 5 und bevorzugt mindestens 1 oder 2 Materialdicken (insbesondere Dicken des Materials der Seitenwand 33 des Behältervorprodukts 13) seitlich über den verlagerbaren Schieber 55 hinaus. Die unbeweglichen Teile 57 können zu diesem Zweck in einem an den verlagerbaren Schieber 55 in der ersten Position angrenzenden ersten Abschnitt 59 eine sich vorzugsweise entlang des gesamten Umfangs des beweglichen Teils 55 erstreckende Vertiefung 62 aufweisen. An den ersten Abschnitt 59 grenzt ein zweiter Abschnitt 61 an, der die Form des fertigen Behälters 11 bestimmt, die sichtbar ist, wenn der Behälter 11 auf der ebenen Unterlage gelagert wird. Die durchschnittliche Erstreckung der Vertiefung 62 in Verlagerungsrichtung (d.h. von der ersten Position in Richtung der zweiten Position) des verlagerbaren Schiebers 55 und/oder in Richtung der Längsachse des Behältervorprodukts 13 kann mit Vorteil mindestens 20, 30 oder 40 und/oder höchstens 80, 70 oder 60 Prozent der vom verlagerbaren Schieber 55 zwischen der ersten Position und der zweiten Position zurückgelegten Strecke entsprechen.

Wird der verlagerbare Schieber 55 von der ersten Position in die Kavität 53 hinein in die zweite Position verlagert, so wird der Boden 22 des Behältervorprodukts 13 in ein durch die Seitenwand 33 und den Boden 22 begrenztes Behälterinneres des Behältervorprodukts 13 hinein geschoben. Dabei wird der an den Boden 22 des Behältervorprodukts 13 angrenzende Bereich der Seitenwand 33 des Behältervorprodukts 13, bei dem es sich vorzugsweise um den in der ersten Position des verlagerbaren Schiebers 55 in der Vertiefung 62 angeordneten Teilbereich der Seitenwand 33 des Behältervorprodukts 13 handelt, umgestülpt oder umgekehrt, lagert sich seitlich an den verlagerbaren Schieber 55 an und bildet schliesslich einen Teilbereich des hinterschnittenen Behälterbodens 21 des fertigen Behälters 11. Dieser an die gebildete Kante 29 angrenzende Teil des Behälterbodens 21, die gleichzeitig den Standbereich des Behälters 11 bildet, ist parallel zum an die Kante 29 angrenzenden Teilbereich der Behälterseitenwand 31 des Behälters 11 ausgerichtet und zweckmässigerweise mit diesem durch Hitzeeinwirkung fest verbunden. Somit ist die Kante 29, respektive der Standbereich des Behälters 11, aus einem Teilbereich der Seitenwand 33 der Behältervorprodukts 13 gebildet. Zum Entformen des Behälters 11 muss des verlagerbare Schieber 55 so weit von seiner zweiten Position in die erste Position verlagert werden, dass der verlagerbare Schieber 55 außer Eingriff mit dem Behälter 11 ist.

### Bezugszeichenliste:

11 Behälter
13 Behältervorprodukt
15 Zusatzprodukt
21 Behälterboden des Behälters
22 Boden des Zwischenprodukts
23 Vertiefung
27 Hohlraum
29 Kante
30 doppelwandiger Bereich
31 Behälterseitenwand des Behälters
33 Seitenwand des Zwischenprodukts
35 Umgefalteter Teil
37 Schulter
39 Öffnung (Ausgiessöffnung)
41 Handbetätigbare Pumpe
43 Tauchrohr
51 Blasformwerkzeug
53 Kavität
55 Teil von 51, der die Form des Behälterbodens definiert (verlagerbarer Schieber)
57 Teile von 51, die die Form der Seitenwand und die Form der Behälterseitenwand definieren (unbewegliche Teile)
59 Erster Abschnitt von 57
61 Zweiter Abschnitt von 57
62 Vertiefung

## Patentansprüche

1. Extrusionsblasgeformter Behälter (11), dessen Behälterinneres durch eine Behälterseitenwand (31) und einen Behälterboden (21) festgelegt ist, wobei ein Standbereich an die Behälterseitenwand (31) und an den Behälterboden (21) unlösbar verbunden ist,
wobei zumindest ein Teilbereich eines Bodens (22) eines aus einem Vorformling gebildeten Behältervorprodukts derart in das Behälterinnere irreversibel verlagert ist, dass zumindest in einem Teilbereich ein hinterschnittener Behälterboden (21) an dem Behälter (11) ausgebildet ist und
wobei der Standbereich (29) des Behälters im Bereich des hinterschnittenen Behälterbodens (21) aus einer Seitenwand (33) des Behältervorprodukts durch Biegen und/oder Stauchen gebildet ist,
**dadurch gekennzeichnet,**
**dass** zumindest ein Teilbereich eines an den hinterschnittenen Behälterboden (21) angrenzenden Abschnitts (35) der Behälterseitenwand im Wesentlichen senkrecht auf eine durch den Standbereich aufgespannte Ebene steht.

2. Behälter nach einem der vorhergehenden Ansprüche, **dadurch gekennzeichnet, dass** der Behälterboden (21) und die Behälterseitenwand (31) einen Winkel einschließen, der gleich oder kleiner 45°, bevorzugt gleich oder kleiner 30° und besonders bevorzugt gleich oder kleiner 15° ist.

3. Behälter nach einem der vorhergehenden Ansprüche, **dadurch gekennzeichnet, dass** sich die Behälterseitenwandung (31) und der Behälterboden (21) zumindest in einem Teilbereich parallel zueinander erstrecken.

4. Behälter nach Anspruch 3, **dadurch gekennzeichnet, dass** die Behälterseitenwand (31) und der Behälterboden (21) in dem Teilbereich zumindest teilweise einander berühren und/oder zumindest teilweise aneinander verschweißt sind.

5. Behälter nach einem der vorhergehenden Ansprüche, **dadurch gekennzeichnet, dass** der Standbereich (29) spitz zuläuft.

6. Behälter nach einem der vorhergehenden Ansprüche, **dadurch gekennzeichnet, dass** der Standbereich (29) durch mindestens zwei Rücksprünge unterteilt ist, die voneinander beabstandet sind.

7. Behälter nach einem der vorhergehenden Ansprüche, **dadurch gekennzeichnet, dass** sich ein Abstand des Behälterbodens gegenüber einer durch den Standbereich (29) aufgespannten Ebene im Wesentlichen von einer ersten Behälterseitenwand zu einer der ersten Behälterseitenwand gegenüberliegenden zweiten Behälterseitenwand kontinuierlich vergrößert.

8. Behälter nach einem der vorhergehenden Ansprüche, **dadurch gekennzeichnet, dass** eine dem Behälterboden (21) gegenüberliegende Oberseite (37) des Behälters eine mit dem Behälterboden (21) korrespondierende Form aufweist und/oder die Oberseite (37) des Behälters in dem Behälterboden (21) eines identischen Behälters aufnehmbar ist, so dass mehrere solcher Behälter aufeinander stapelbar sind.

9. Verfahren zur Herstellung eines Behälters (11) mittels Extrusionsblasformen, dessen Behälterinneres durch eine Behälterseitenwand (31) und einen Behälterboden (21) festgelegt ist, wobei ein Standbereich (29) an die Behälterseitenwand und an den Behälterboden unlösbar verbunden ist, mit folgenden Verfahrensschritten:
- Einbringen eines Vorformlings (13) in eine Kavität (53) eines geöffneten Blasformwerkzeugs (51);
- Schließen des Blasformwerkzeugs (51) und Fixieren des Vorformlings (13) in der Kavität (53);
- Einbringen von Gas unter Überdruck in den Vorformling (13), so dass eine Wandung des Vorformlings an eine Innenwandung der Kavität (53) zur Erzeugung eines Behältervorprodukts mit einem Boden und einer Seitenwand gepresst wird;
- Verlagern eines verlagerbaren Schiebers (55) des Blasformwerkzeugs (51) von einer ersten Position, in der der Boden des Behältervorprodukts geformt wurde, in eine zweite Position, in der zumindest ein Teilbereich des Bodens derart in das Behälterinnere irreversibel verlagert wird, dass zumindest in einem Teilbereich ein hinterschnittener Behälterboden (21) an dem Behälter (11) ausgebildet wird, wobei der Standbereich (29) des Behälters (11) im Bereich des hinterschnittenen Behälterbodens (21) aus einer Seitenwand des Behältervorprodukts durch Biegen und/oder Stauchen gebildet wird
**dadurch gekennzeichnet,**
**dass** der Schieber (55) frei ist von umfangsvergrößernden Strukturen.

10. Verfahren nach Anspruch 9, **dadurch gekennzeichnet, dass** das Blasformwerkzeug (51) beim Verlagern des Schiebers (55) von der ersten Position in die zweite Position geschlossen ist.

11. Verfahren nach Anspruch 9, **dadurch gekennzeichnet, dass** das Blasformwerkzeug (51) zum Verlagern des Schiebers (55) von der ersten Position 1mm, bevorzugt 0,3mm bis 0,5mm geöffnet wird und nach Erreichen der zweiten Position geschlossen wird.

12. Verfahren nach einem der Ansprüche 9 bis 11, **dadurch gekennzeichnet, dass** sich ein Teilbereich (30) des Behälterbodens (21) im Wesentlichen parallel zur Behälterseitenwand (31) erstreckt.

13. Blasformwerkzeug (51) mit einer formgebenden Kavität (53) zur Herstellung eines Behälters (11) mittels Extrusionsblasformen, dessen Behälterinneres durch eine Behälterseitenwand (31) und einen Behälterboden (21) festgelegt ist, wobei ein Standbereich (29) an die Behälterseitenwand und an den Behälterboden unlösbar verbunden ist, wobei ein von einer ersten Position in die Kavität (53) hinein in eine zweite Position, und umgekehrt, verlagerbarer Schieber (55) in der ersten Position eine Form eines Bodens eines Behältervorprodukts und in der zweiten Stellung eine Form eines hinterschnittenen Behälterbodens des fertigen Behälters definiert, **dadurch gekennzeichnet,**
**dass** der Schieber (55) frei ist von umfangsvergrößernden Strukturen.

14. Blasformwerkzeug nach Anspruch 13, **dadurch gekennzeichnet, dass** der Schieber von einer Innenwandung der Kavität (53) derart beabstandet ist, dass zumindest ein Teilbereich (30) einer Seitenwand des Behältervorprodukts bei Verlagerung des Schiebers von der ersten in die zweite Stellung biegbar, insbesondere faltbar, und/oder stauchbar ist.

15. Blasformwerkzeug nach Anspruch 14, **dadurch gekennzeichnet, dass** der Schieber (55) auf einem ersten Teil einer Verlagerungsstrecke zwischen der ersten Position und der zweiten Position in einem grösseren seitlichen Abstand von der Innenseite der Kavität (53) angeordnet ist, als auf einem zweiten Teil der Strecke.

## Claims

1. Extrusion blow molded container (1), the container inner part of which is defined by a container side wall (31) and a container bottom (21), wherein a stand area is undetachably connected to the container side wall (31) and to the container bottom (21),
wherein at least one partial area of a bottom (22) of a container preliminary product formed from a preform is irreversibly displaced into the container inner part in such a manner that an undercut container bottom (21) is configured on the container (11) at least in one partial area and
wherein the stand area (29) of the container is formed in the area of the undercut container bottom (21) from a side wall (33) of the container preliminary product by bending and/or swaging,
**characterized in**
**that** at least one partial area of a section (35) of the container side wall that is adjacent to the undercut container bottom (21) stands substantially perpendicularly on a plane spanned through the standing area.

2. Container according to one of the preceding claims, **characterized in that** the container bottom (21) and the container side wall (31) form an angle that is equal to or less than 45°, preferably equal to or less than 30° and particularly preferable equal to or less than 45°.

3. Container according to one of the preceding claims, **characterized in that** the container side wall (31) and the container bottom (21) extend parallel to one another at least in one partial area.

4. Container according to claim 3, **characterized in that** the container side wall (31) and the container bottom (21) contact with one another at least partially in the partial area and/or are sealed at least partially with one another.

5. Container according to one of the preceding claims, **characterized in that** the stand area (29) is pointed.

6. Container according to one of the preceding claims, **characterized in that** the stand area (29) is divided by at least two recesses that are spaced from one another.

7. Container according to one of the preceding claims, **characterized in that** a distance of the container bottom to a plane spanned through the stand area (29) continuously increases substantially from a first container side wall to a second container side wall opposed to the first container side wall.

8. Container according to one of the preceding claims, **characterized in that** an upper side (37) of the container that is opposed to the container bottom (21) has a shape corresponding to the container bottom (21) and/or the upper side (37) of the container can be received in the container bottom (21) of an identical container so that several such containers can be stacked on top of one another.

9. Method for manufacturing a container (11) by means of extrusion blow molding, the container inner part of which is defined by a container side wall (31) and a container bottom (21), wherein a stand area is undetachably connected to the container side wall and to the container bottom, with the following method steps:
- bringing in of a preform (13) into a cavity (53) of an opened blow molding tool (51);
- closing of the blow molding tool (51) and fixing of the preform (13) in the cavity (53);
- introduction of gas under pressure into the preform (13) so that a wall of the preform is pressed to the inner wall of the cavity (53) for producing a container preliminary product with a bottom and a side wall;
- displacement of a displaceable slide (55) of the blow molding tool (51) from a first position in which the bottom of the container preliminary product has been molded to a second position in which at least one partial area of the bottom is irreversibly displaced into the container inner part in such a manner that an undercut container bottom (21) is configured on the container (11) at least in one partial area, wherein the stand area (29) of the container (11) is formed in the area of the undercut container bottom (21) from a side wall (33) of the container preliminary product by bending and/or swaging,
**characterized in**
**that** the slide (55) is free from structures that increase the periphery.

10. Method according to claim 9, **characterized in that** the blow molding tool (51) is closed during the displacement of the slide (55) from the first position to the second position.

11. Method according to claim 9, **characterized in that** the blow molding tool (51) opens for the displacement of the slide (55) from the first position by 1 mm, preferably by 0,3 mm to 0,5 mm, and closes after reaching the second position.

12. Method according to one of the claims 9 to 11, **characterized in that** one partial area (30) of the container bottom (21) extends substantially parallel to the container side wall (31).

13. Blow molding tool (51) with a shape forming cavity (53) for manufacturing a container (11) by means of extrusion blow molding, the container inner part of which is defined by a container side wall (31) and a container bottom (21), wherein a stand area (29) is undetachably connected to the container side wall and to the container bottom, wherein a slide (55) displaceable from a first position into the cavity (53) into a second position and back defines, in the first position, a shape of a bottom of a container preliminary product and, in the second position, a shape of an undercut container bottom of the final container, **characterized in**
**that** the slide (55) is free from structures that increase the periphery.

14. Blow molding tool according to claim 13, **characterized in that** the slide is spaced from an inner wall of the cavity (53) in such a manner that at least one partial area (30) of a side wall of the container preliminary product can be bent during the displacement of the slide from the first position into the second position, in particular can be folded and/or swaged.

15. Blow molding tool according to claim 14, **characterized in that** the slide (55) is placed on a first part of a displacement path between the first position and the second position at a bigger lateral distance from the inner side of the cavity (53) than on a second part of the path.

## Revendications

1. Conteneur moulé par extrusion-soufflage (11) dont l'intérieur du conteneur est défini par une paroi latérale de conteneur (31) et un fond de conteneur (21), cependant qu'une zone d'appui est reliée de manière inamovible à la paroi latérale de conteneur (31) et au fond de conteneur (21),
cependant qu'au moins une zone partielle d'un fond (22) d'un produit préliminaire de conteneur formé par une préforme est déplacée de manière irréversible dans l'intérieur du conteneur de telle façon qu'un fond de conteneur contre-dépouillé (21) est configuré sur le conteneur (11) au moins dans une zone partielle et
cependant que la zone d'appui (29) du conteneur est formée dans la zone du fond de conteneur contre-dépouillé (21) à partir d'une paroi latérale (33) du produit préliminaire de conteneur par cintrage et/ou écrasement, **caractérisé en ce**
**qu'**au moins une zone partielle d'une section (35) de la paroi latérale de conteneur, adjacente au fond de conteneur contre-dépouillé (21), est substantiellement perpendiculaire à un plan sous-tendu par la zone d'appui.

2. Conteneur selon l'une des revendications précédentes, **caractérisé en ce que** le fond de conteneur (21) et la paroi latérale de conteneur (31) incluent un angle qui est égal ou inférieur à 45°, de préférence égal ou inférieur à 30° et de manière particulièrement préférée égal ou inférieur à 15°.

3. Conteneur selon l'une des revendications précédentes, **caractérisé en ce que** la paroi latérale de conteneur (31) et le fond de conteneur (21) s'étendent parallèlement l'un à l'autre au moins dans une zone partielle.

4. Conteneur selon la revendication 3, **caractérisé en ce que** la paroi latérale de conteneur (31) et le fond de conteneur (21) se touchent au moins partiellement dans la zone partielle et/ou sont soudés l'un à l'autre au moins partiellement.

5. Conteneur selon l'une des revendications précédentes, **caractérisé en ce que** la zone d'appui (29) se termine en pointe.

6. Conteneur selon l'une des revendications précédentes, **caractérisé en ce que** la zone d'appui (29) est divisée par au moins deux retraits qui sont espacés l'un de l'autre.

7. Conteneur selon l'une des revendications précédentes, **caractérisé en ce qu'**un écart du fond de conteneur par rapport à un plan sous-tendu par la zone d'appui (29) s'agrandit en continu substantiellement d'une première paroi latérale de conteneur vers une seconde paroi latérale de conteneur opposée à la première paroi latérale de conteneur.

8. Conteneur selon l'une des revendications précédentes, **caractérisé en ce qu'**un côté supérieur (37) du conteneur opposé au fond du conteneur (21), présente une forme qui correspond au fond de conteneur (21) et/ou le côté supérieur (37) du conteneur peut être logé dans le fond de conteneur (21) d'un conteneur identique si bien que plusieurs conteneurs de ce type peuvent être empilés l'un sur l'autre.

9. Procédé de fabrication d'un conteneur (11 moulé par extrusion-soufflage dont l'intérieur du conteneur est défini par une paroi latérale de conteneur (31) et un fond de conteneur (21), cependant qu'une zone d'appui (29) est reliée de manière inamovible à la paroi latérale de conteneur (31) et au fond de conteneur, avec les étapes de procédé suivantes :
- mise en place d'une préforme (13) dans une cavité (53) d'un outil ouvert de moulage par soufflage (51) ;
- fermeture de l'outil de moulage par soufflage (51) et fixation de la préforme (13) dans la cavité (53) ;
- introduction de gaz en surpression dans la préforme (13) si bien qu'une paroi de la préforme est pressée contre une paroi intérieure de la cavité (53) pour produire un produit préliminaire de conteneur avec un fond et une paroi latérale ;
- déplacement d'un coulisseau déplaçable (55) de l'outil de moulage par soufflage (51) d'une première position dans laquelle le fond du produit préliminaire de conteneur a été moulé dans une seconde position dans laquelle au moins une zone partielle du fond est déplacée de manière irréversible dans l'intérieur du conteneur de telle façon qu'un fond de conteneur contre-dépouillé (21) est configuré sur le conteneur (11) au moins dans une zone partielle, cependant que la zone d'appui (29) du conteneur (11) est formée dans la zone du fond de conteneur contre-dépouillé (21) à partir d'une paroi latérale du produit préliminaire de conteneur par cintrage et/ou écrasement, **caractérisé en ce que** le coulisseau (55) est exempt de structures qui augmentent la circonférence.

10. Procédé selon la revendication 9, **caractérisé en ce que** l'outil de moulage par soufflage (51) est fermé lors du déplacement du coulisseau (55) de la première position à la seconde position.

11. Procédé selon la revendication 9, **caractérisé en ce que** l'outil de moulage par soufflage (51) est ouvert, pour le déplacement du coulisseau (55) de la première position d'1 mm, de préférence de 0,3 mm à 0,5 mm et est fermé après avoir atteint la seconde position.

12. Procédé selon l'une des revendications 9 à 11, **caractérisé en ce qu'**une zone partielle (30) du fond de conteneur (11) s'étend substantiellement parallèlement à la paroi intérieure de conteneur (31).

13. Outil de moulage par soufflage (51) avec une cavité qui donne la forme (53) pour la fabrication d'un conteneur (11) par moulage par extrusion-soufflage dont l'intérieur du conteneur est défini par une paroi latérale de conteneur (31) et un fond de conteneur (21), cependant qu'une zone d'appui (29) est reliée de manière inamovible à la paroi latérale de conteneur et au fond de conteneur, cependant qu'un coulisseau (55) déplacé d'une première position en entrant dans la cavité (53) dans une seconde position et vice-versa définit, dans la première position, une forme d'un fond d'un produit préliminaire de conteneur et, dans la seconde position, une forme d'un fond de conteneur contre-dépouillé du conteneur fini,
**caractérisé en ce que** le coulisseau (55) est exempt de structures qui augmentent la circonférence.

14. Outil de moulage par soufflage selon la revendication 13, **caractérisé en ce que** le coulisseau est espacé d'une paroi intérieure de la cavité (53) de telle manière qu'au moins une zone partielle (30) d'une paroi latérale du produit préliminaire de conteneur peut, lors du déplacement du coulisseau, être cintrée de la première à la seconde position, en particulier peut être pliée et/ou écrasée.

15. Outil de moulage par soufflage selon la revendication 14, **caractérisé en ce que** le coulisseau (55) est placé sur une première partie d'un trajet de déplacement entre la première position et la seconde position à un écart latéral plus grand de la face intérieure de la cavité (53) que sur une seconde partie du trajet.
